(19) Europäisches Patentamt / European Patent Office / Office européen des brevets

(11) **EP 4 290 417 A1**

(12) **EUROPEAN PATENT APPLICATION**

(43) Date of publication:
**13.12.2023  Bulletin 2023/50**

(21) Application number: **23166964.9**

(22) Date of filing: **06.04.2023**

(51) International Patent Classification (IPC):
**G06N 5/01** *(2023.01)*      **G06N 7/01** *(2023.01)*

(52) Cooperative Patent Classification (CPC):
**G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.06.2022   JP 2022092706**

(71) Applicant: **FUJITSU LIMITED**
**Kawasaki-shi, Kanagawa 211-8588 (JP)**

(72) Inventor: **KANDA, Kouichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, AND INFORMATION PROCESSING PROGRAM**

(57)    An information processing apparatus configured to: store $N^2$ state variables included in an energy function of an Ising model, and execute a traveling transition process of returning from a first state to the first state through a plurality of states by repeating a state transition of changing values of four state variables so as to satisfy a constraint in which a sum of values of state variables included in each row is 1 and a sum of values of state variables included in each column is 1 when the $N^2$ state variables are arranged in N rows and N columns, specify a second state in which an accumulation of a change amount of a value of the energy function for each state transition satisfies a predetermined determination criterion, and search for a solution to a permutation optimization problem represented by the energy function by starting from the second state.

FIG. 1

EP 4 290 417 A1

**Description**

FIELD

The embodiments discussed herein are related to an information processing apparatus, an information processing method, and an information processing program.

BACKGROUND

An information processing apparatus may be used for searching a solution to a combinatorial optimization problem. The combinatorial optimization problem is converted into an energy function of an Ising model, which is a model representing a behavior of a spin of a magnetic body. The energy function may be referred to as an evaluation function or an objective function.

For example, the information processing apparatus searches for a combination that minimizes a value of the energy function among combinations of values of state variables included in the energy function. In this case, a combination of values of state variables that minimizes the value of the energy function corresponds to a ground state or an optimum solution represented by a set of state variables. As a method for acquiring an approximate solution to a combinatorial optimization problem in a practical time, a simulated annealing (SA) method, a replica exchange method, or the like based on a Markov-chain Monte Carlo (MCMC) method is applied.

Meanwhile, some combinatorial optimization problems have a constraint in which the number of state variables having a value of 1 among a plurality of state variables included in an energy function is only one, for example, a 1-Hot constraint. According to the 1-Hot constraint, when $N^2$ state variables are arranged in a matrix of N rows and N columns, a sum of values of the state variables included in each row and each column is 1. The 1-Hot constraint is referred to as a 2-Way 1-Hot constraint. For example, when $x_1$ to $x_9$ are arranged in a matrix shape of 3 rows and 3 columns, a constraint in which $x_1+x_2+x_3 = 1$, $x_4+x_5+x_6 = 1$, $x_7+x_8+x_9 = 1$, $x_1+x_4+x_7 = 1$, $x_2+x_5+x_8 = 1$, and $x_3+x_6+x_9 = 1$ is the 2-Way 1-Hot constraint. A traveling salesman problem, a vehicle routing problem, a quadratic assignment problem, a linear ordering problem, and the like have the 2-Way 1-Hot constraint.

A value of each state variable in N rows and N columns may be represented by a permutation of N different elements in the combinatorial optimization problem having the 2-Way 1-Hot constraint. For example, assuming that three different elements are represented by "1, 2, 3", the value of each state variable in the 3 rows and 3 columns is represented by (1, 2, 3), (2, 1, 3), or the like. For example, a position of an element of a permutation indicates a row, and a value of the element of the permutation indicates a column of a state variable, which is 1. In this manner, a solution satisfying the 2-Way 1-Hot constraint is represented by a permutation. A combinatorial optimization problem in which the solution is represented by the permutation is referred to as a permutation optimization problem.

For example, there is a proposal of an optimization apparatus that searches for a solution to the combinatorial optimization problem by using the 2-Way 1-Hot constraint.

There is another proposal of an optimization apparatus in which, in a case where solution searching is repeated from different initial states in an optimization problem, an initial state used in each solution search is set as a local solution obtained by improving an objective function value from a first state separated by a predetermined distance or more from a solution obtained in the past.

There is still another proposal of a combination optimization apparatus that searches for values of a plurality of state variables that minimize a value of a first energy function. The proposed combination optimization apparatus performs a first search using a first energy function, a second search using a second energy function obtained by removing a term representing a constraint condition from the first energy function after the first search, and a third search using the first energy function after the second search.

There is still another proposal of an information processing apparatus in which, in annealing for obtaining a solution by using an Ising model, calculation of an instantaneous magnetic field, calculation of an update probability of a spin, and an update of the spin are all executed in parallel.

Japanese Laid-open Patent Publication No. 2021-157361, Japanese Laid-open Patent Publication No. 2021-43787, Japanese Laid-open Patent Publication No. 2021-33657, and U.S. Patent No. 2021/0072959 are disclosed as related art.

SUMMARY

[TECHNICAL PROBLEMS]

In the above-described optimization apparatus that performs a search of a solution to the combinatorial optimization problem having the 2-Way 1-Hot constraint, for example, a permutation optimization problem, values of at most four state variables are changed in one state transition trial. Meanwhile, when a state of a transition destination is determined only from states in which the values of at most four state variables are changed with respect to the current state, for example, in a case where a local solution is reached, it may not be possible to escape from the local solution.

According to one aspect, it is an object of the present disclosure to provide an information processing apparatus, an information processing method, and a program capable of efficiently searching for various states.

[SOLUTION TO PROBLEM]

According to an aspect of the embodiments, an information processing apparatus that searches for a solution to a permutation optimization problem represented by an energy function of an Ising model, the information processing apparatus includes a storage unit that stores $N^2$ state variables (N is an integer equal to or more than 3) which indicate a state of the Ising model, the $N^2$ state variables being included in the energy function; and a processing unit that executes a traveling transition process of returning from a first state to the first state through a plurality of states by repeating a state transition of changing values of four state variables of the $N^2$ state variables so as to satisfy a constraint in which a sum of values of state variables included in each row is 1 and a sum of values of state variables included in each column is 1 when the $N^2$ state variables are arranged in N rows and N columns, specifies a second state in which an accumulation of a change amount of a value of the energy function for each state transition from the first state satisfies a predetermined determination criterion, among the plurality of states sequentially obtained by the traveling transition process, and searches for a solution to a permutation optimization problem represented by the energy function by starting from the second state.

[ADVANTAGEOUS EFFECTS OF INVENTION]

According to one aspect, it is possible to efficiently search for various states.

BRIEF DESCRIPTION OF DRAWINGS

FIG. 1 is a diagram for describing an information processing apparatus according to a first embodiment;
FIG. 2 is a diagram illustrating a hardware example of an information processing apparatus according to a second embodiment;
FIG. 3 is a diagram illustrating a bit flip control example with 2-Way 1-Hot;
FIGs. 4A and 4B are diagrams illustrating an example of a correspondence relationship between a state and a permutation of an Ising model;
FIG. 5 is a diagram illustrating a functional example of the information processing apparatus;
FIG. 6 is a diagram illustrating an operation example of a normal 2W1H mode and a traveling transition mode;
FIG. 7 is a flowchart illustrating a process example of the information processing apparatus;
FIG. 8 is a diagram illustrating another example (part 1) of the traveling transition mode;
FIG. 9 is a diagram illustrating still another example (part 2) of the traveling transition mode; and
FIG. 10 is a diagram illustrating still another example (part 3) of the traveling transition mode.

DESCRIPTION OF EMBODIMENTS

Hereinafter, the present embodiments will be described with reference to the drawings.

[First Embodiment]

A first embodiment will be described.

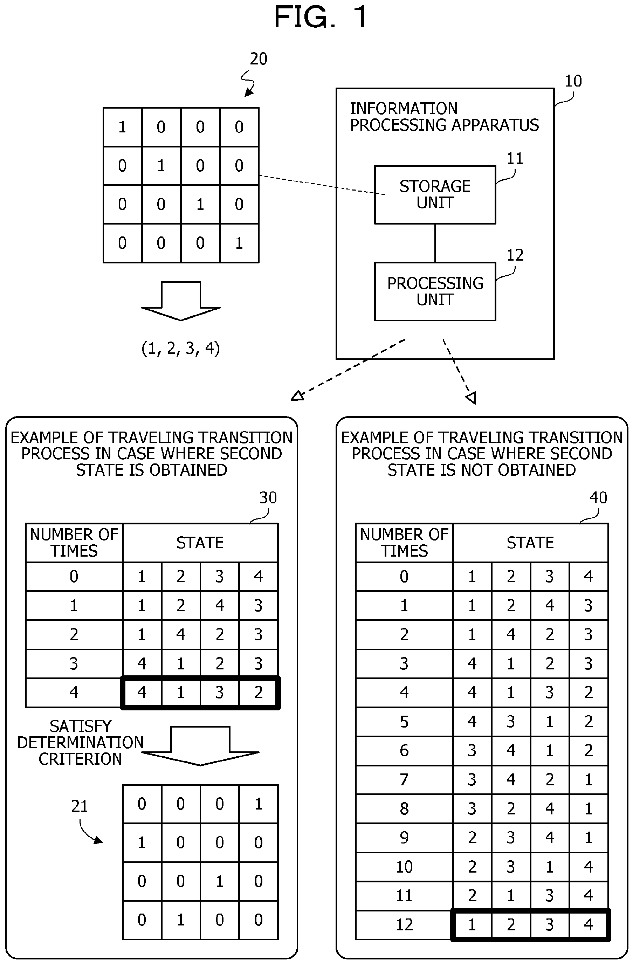

FIG. 1 is a diagram illustrating an information processing apparatus according to the first embodiment.
An information processing apparatus 10 searches for a solution to a combinatorial optimization problem by using an MCMC method, and outputs the searched solution. For example, the information processing apparatus 10 uses an SA method or the like based on the MCMC method to search for the solution. The information processing apparatus 10 includes a storage unit 11, and a processing unit 12.
The storage unit 11 is, for example, a volatile storage device such as a random-access memory (RAM). The storage unit 11 may include an electronic circuit such as a register. The processing unit 12 may be an electronic circuit such as a central processing unit (CPU), a digital signal processor (DSP), an application-specific integrated circuit (ASIC), a field-programmable gate array (FPGA), or a graphics processing unit (GPU). The processing unit 12 may be a processor that executes a program. The "processor" may include a set of a plurality of processors (multiprocessor).

The combinatorial optimization problem is formulated by an Ising-type energy function, and is replaced with, for example, a problem that minimizes a value of an energy function. The energy function may also be referred to as an objective function, an evaluation function, or the like. The energy function includes a plurality of state variables. The state variable is a binary variable having a value of 0 or 1. The state variable may also be referred to as a bit. A solution to the combinatorial optimization problem is represented by values of the plurality of state variables. The solution that minimizes the value of the energy function represents a ground state of an Ising model, and corresponds to an optimum solution to the combinatorial optimization problem. The value of the energy function is represented as energy.

The Ising-type energy function is represented by Equation (1).

$$E(\boldsymbol{x}) = -\sum_{\langle i,j \rangle} W_{ij} x_i x_j - \sum_i b_i x_i \qquad (1)$$

A state vector x has a plurality of state variables as elements, and represents a state of the Ising model. Equation (1) is an energy function formulated in a quadratic unconstrained binary optimization (QUBO) form. In a case of a problem of maximizing energy, a sign of the energy function may be reversed.

A first term on the right side of Equation (1) is obtained by integrating a product of values of two state variables and a weight coefficient without omission and duplication for all combinations of two state variables that are selectable from all state variables. Subscripts i and j are indices of state variables. $x_i$ is an i-th state variable. $x_j$ is a j-th state variable. $W_{ij}$ is a weight between the i-th state variable and the j-th state variable or a weight coefficient indicating a strength of coupling. $W_{ij} = W_{ji}$, and $W_{ii} = 0$.

A second term on the right side of Equation (1) is a sum of a product of a value of the state variable and a bias for each of all the state variables. $b_i$ indicates a bias for the i-th state variable. Problem data including the weight coefficient, the bias, or the like included in the energy function is stored in the storage unit 11. In Equation (1), when the value of the state variable $x_i$ is changed to $1-x_i$, an increase in $x_i$ may be represented as $\delta x_i = (1-x_i)-x_i = 1-2x_i$. A change amount $\Delta E$ of energy according to a change in $x_i$ is represented by Equation (2).

$$\begin{aligned} \Delta E_i &= E(\boldsymbol{x})\Big|_{x_i \to 1-x_i} - E(\boldsymbol{x}) \\ &= -\delta x_i \left( \sum_j W_{ij} x_j + b_i \right) \\ &= -\delta x_i h_i \\ &= \begin{cases} -h_i & for\ x_i = 0 \to 1 \\ +h_i & for\ x_i = 1 \to 0 \end{cases} \end{aligned} \qquad (2)$$

$h_i$ is referred to as a local field, and is represented by Equation (3). The local field may also be referred to as a local field (LF).

$$h_i = \sum_j W_{ij} x_j + b_i \qquad (3)$$

A change amount $\delta h_i^{(j)}$ of the local field $h_i$ when the state variable $x_j$ is changed is represented by Equation (4).

$$\delta h_i^{(j)} = \begin{cases} +W_{ij} & for\ x_j = 0 \to 1 \\ -W_{ij} & for\ x_j = 1 \to 0 \end{cases} \qquad (4)$$

By adding the change amount $\delta h_i^{(j)}$ to $h_i$ when the value of the state variable $x_j$ is changed, $h_i$ corresponding to a state after the change of the value of $x_j$ is obtained.

A Metropolis method or a Gibbs method is used for determining whether or not a state transition in which an energy change is $\Delta E_i$, for example, the change of the value of the state variable $x_i$ is allowed, in a search for the ground state. For example, in a neighbor search for searching for a transition from a certain state to another state in which energy is lower than energy of the state, the transition to not only a state in which energy is lowered but also a state in which energy is increased is stochastically allowed. For example, a probability A of accepting the change in value of the state variable of the energy change $\Delta E$ is represented by Equation (5).

$$A(\Delta E) = \begin{cases} \min\left[1, \exp(-\beta \cdot \Delta E)\right] & \text{Metropolis} \\ 1/\left[1 + \exp\left(\beta \cdot \Delta E\right)\right] & \text{Gibbs} \end{cases} \qquad (5)$$

$\beta$ is a reciprocal number ($\beta = 1/T$) of a temperature value T (T > 0), and is referred to as an inverse temperature. An operator min indicates a minimum value of arguments. An upper right side of Equation (5) corresponds to the Metropolis method. A lower right side of Equation (5) corresponds to the Gibbs method. The processing unit 12 compares a uniform random number u satisfying 0 < u < 1 with A for a certain index i, and when u < A, the processing unit 12 accepts a change in value of the state variable $x_i$ and changes the value of the state variable $x_i$. Unless u < A, the processing unit 12 does not accept the change in value of the state variable $x_i$ and does not change the value of the state variable $x_i$. According to Equation (5), as $\Delta E$ is a larger value, A is smaller. As $\beta$ is smaller, for example, T is lager, a state transition in which $\Delta E$ is larger is more likely to be allowed. For example, in a case where a determination criterion of the Metropolis method is used, the transition determination may be performed by Equation (6) obtained by modifying Equation (5).

$$\ln(u) \times T \leq -\Delta E \qquad (6)$$

For example, in a case where the energy change $\Delta E$ satisfies Equation (6) with respect to the uniform random number u (0 < u ≤ 1), the change in value of the corresponding state variable is allowed. For the uniform random number u, in a case where the energy change $\Delta E$ does not satisfy Equation (6), the change in value of the corresponding state variable is not allowed. ln(u)·T corresponds to a thermal noise. For example, in the SA method, a solution is searched while gradually decreasing the temperature value T from a maximum temperature value to a minimum temperature value.

The processing unit 12 efficiently solves the combinatorial optimization problem having the 2-Way 1-Hot constraint, for example, a permutation optimization problem by excluding the search for a state other than the state satisfying the 2-Way 1-Hot constraint. The permutation optimization problem is a problem for obtaining a permutation that minimizes or maximizes a value of an energy function, the permutation being represented by values of $N^2$ state variables. The permutation optimization problem includes, for example, a quadratic assignment problem (QAP), a traveling salesman problem (TSP), a vehicle routing problem (VRP), a linear ordering problem (LOP), or the like. In a case of excluding the search for the state other than the state satisfying the 2-Way 1-Hot constraint, the processing unit 12 changes the values of the four state variables in one state transition.

Hereinafter, it is assumed that state variables of $n = N^2$ (N is an integer equal to or more than 3) included in an energy function have the 2-Way 1-Hot constraint. By changing the values of the four state variables in one state transition so as to satisfy a constraint in which a sum of the values of the state variables included in each row and each column when these state variables are arranged in N rows and N columns is 1, a search for a state other than a state satisfying the 2-Way 1-Hot constraint is excluded. For example, in a case where the $N^2$ state variables are arranged in N rows and N columns, $x_1$ to $x_N$ correspond to a first column to an N-th column of a first row, $x_{N+1}$ to $x_{2N}$ correspond to a first column to an N-th column of a second row, and then $x_{N^2-N+1}$ to $x_{N^2}$ correspond to a first column to an N-th column of an N-th row, in the same manner.

In a case where one of the state variables having a value of 0 is set as an update target candidate in a state in which the 2-Way 1-Hot constraint is satisfied, state variables of other three update target candidates are determined.

For example, it is assumed that values of four state variables ($x_i$, $x_j$, $x_k$, $x_l$) of index = i, j, k, l (i < j < k < l) are changed. $x_i$ and $x_j$ belong to the same row. $x_i$ and $x_k$ belong to the same column. $x_k$ and $x_l$ belong to the same row. $x_j$ and $x_l$ belong to the same column.

In a case where $x_j$, which is a state variable having a value of 0, is an update target candidate, $x_i$ and $x_l$, which are state variables having a value of 1 among the state variables included in the same row and the same column as $x_j$, are the update target candidates. $x_k$ having a value of 0 in the same column as $x_i$ and in the same row as $x_l$ is the update

target candidate. The changes in values of these four state variables ($x_i$, $x_j$, $x_k$, $x_l$) may be represented by Equation (7).

$$x_i : 1 \to 0, \quad x_j : 0 \to 1, \quad x_k : 0 \to 1, \quad x_l : 1 \to 0 \qquad (7)$$

Assuming that an energy change of the Ising model occurring in a case where the values of four state variables ($x_i$, $x_j$, $x_k$, $x_l$) are changed is $\Delta E_j$, $\Delta E_j$ may be represented by the following Equation (8).

$$\Delta E_j = (h_i + h_l) - (h_j + h_k) - (W_{il} + W_{jk}) \qquad (8)$$

A change amount $\Delta h_m$ (m = 1, 2, ..., and n) of a local field according to a change in $x_i$, $x_j$, $x_k$, and $x_l$ is represented by the following Equation (9).

$$\Delta h_m = W_{mj} + W_{mk} - (W_{mi} + W_{ml}) \qquad (9)$$

In this manner, in the permutation optimization problem, $\Delta E_j$ of Equation (8) is used for $\Delta E$ of Equation (5) or Equation (6). $\Delta h_m$ in Equation (9) is used instead of $\delta h_i^{(j)}$ in Equation (4). The storage unit 11 holds the values of the $N^2$ state variables. The storage unit 11 holds a local field $h_m$ corresponding to each of the $N^2$ state variables. Based on $h_m$ held in the storage unit 11, the processing unit 12 calculates $\Delta E_j$. Based on $\Delta E$; and Equation (5) or Equation (6), the processing unit 12 determines four state variables of which values are allowed to be changed. Among the $N^2$ state variables held in the storage unit 11, the processing unit 12 transitions a state of the Ising model, by changing the values of four state variables of which the values are allowed to be changed. As the values of the four state variables are changed, the processing unit 12 updates $h_m$ held in the storage unit 11 to $h_m = h_m + \Delta h_m$.

For example, the processing unit 12 may repeatedly perform a process of sequentially selecting four state variables to be change candidates, performing calculation of $\Delta E_j$ or determination of Equation (5) or Equation (6), and changing values of the four state variables of which the values are allowed to be changed. Alternatively, the processing unit 12 may perform the calculation of $\Delta E_j$ and the determination of Equation (5) or Equation (6) in parallel, for a plurality of sets of four state variables of the change candidates. In this case, the processing unit 12 repeatedly performs a process of randomly selecting one from a set of which a value change is allowed, and changing the values of four state variables belonging to the set.

In this manner, the processing unit 12 has a mechanism of changing the values of at most four state variables in one trial of a state transition in searching of a solution to the permutation optimization problem. The value of each state variable in N rows and N columns may be represented by a permutation. For example, a position of an element of a permutation indicates a row, and a value of the element of the permutation indicates a column of a state variable, which is 1. FIG. 1 illustrates a case of N = 4, for example, a permutation (1, 2, 3, 4) corresponding to one state 20 represented by a total of 16 state variables of 4 rows and 4 columns. For example, a p-th value q from a left of the permutation indicates that an element of a p-th row from a top and a q-th column from a left of a matrix indicated by the state 20 is 1. The p-th value q from the left of the permutation may indicate that an element in a p-th column from a left and a q-th row from a top of the matrix indicated by the state 20 is 1.

An operation of changing the values of the four state variables by the processing unit 12 corresponds to an operation of exchanging positions of arbitrary two elements in the permutation. Meanwhile, with one operation by the processing unit 12, it is only possible to exchange the two elements such as (1, 2, 4, 3), (1, 4, 3, 2), and (4, 2, 3, 1), for the original permutation (1, 2, 3, 4).

When a state of the next transition destination is determined by such an operation, for example, in a case where a local solution is reached, it may not be possible to escape from the local solution, and a more appropriate solution may not be obtained. Accordingly, the processing unit 12 may search for more various solutions by the following process.

For example, the processing unit 12 executes a traveling transition process of returning from a first state to the first state through a plurality of states, by repeating a state transition of changing the values of the four state variables. Among the states sequentially obtained by the traveling transition process, the processing unit 12 specifies a second state in which an accumulation of change amount in value of an energy function for each state transition from the first state satisfies a predetermined determination criterion.

For example, the processing unit 12 acquires the second state with respect to the first state, by repeatedly executing a process including the following first step to fourth step. The first state is a state at a starting point of the following traveling transition process.

The first step is a step of calculating an energy change amount in a case where the values of the four state variables among $N^2$ state variables are changed, based on Equation (8). A selection order of a set of four state variables of which values are to be changed next is determined in advance.

The second step is a step of changing the values of the four state variables. At the second step, the processing unit 12 also updates the local field $h_m$ based on Equation (9).

The third step is a step of determining whether or not the accumulation of change amount in energy for each change of the values of the four state variables satisfies a predetermined determination criterion. The accumulation of change amount in energy obtained from the first state as a starting point to the previous time is held in the storage unit 11. By adding the energy change amount obtained in the current first step to the accumulation of the energy change amount obtained up to the previous time, the processing unit 12 obtains an accumulation $\Delta E'$ of the energy change amounts up to the current time. The accumulation $\Delta E$ is a difference between the energy in the first state, which is the state at the starting point, and the energy in the current state. As the predetermined determination criterion, for example, the above-described determination criterion of the Metropolis method or the Gibbs method is used. For example, the processing unit 12 sets $\Delta E$ in Equation (5) or Equation (6) as the accumulation $\Delta E'$ of the change amount, and determines whether or not a determination criterion by Equation (5) or Equation (6) is satisfied. An execution order of the second step and the third step may be reversed.

The fourth step is a step of selecting a set of four state variables of which values are to be changed next, in a case where the accumulation of the change amounts does not satisfy the predetermined determination criterion. After the fourth step, the processing unit 12 proceeds to the first step, and executes the process repeated from the first step.

In a case where the accumulation of the change amount of energy satisfies the predetermined determination criterion in the determination of the third step, the processing unit 12 specifies the current state as the second state with respect to the first state, and ends the repetition of the above-described process. On the other hand, the processing unit 12 matches a state reached by repeating the above-described process including the first step to the fourth step a plurality of times while the second state is not specified, with the first state.

Tables 30 and 40 indicate an example of a traveling transition process in which the state 20 is set as the first state. The table 30 indicates a case where the second state is obtained. The table 40 indicates a case where the second state is not obtained. "Number of times" in the tables 30 and 40 indicates the number of repetitions of the above-described process including the first step to the fourth step. "State" of the tables 30 and 40 indicates a state reached at a state transition is repeated the number of times equal to the number of repetitions. A record with the number of times "0" in the tables 30 and 40 indicates the first state.

For example, the processing unit 12 uses a transition pattern in which switching is performed by sequentially selecting exchange targets $(\gamma, \delta)$, $(\beta, \delta)$, and $(\alpha, \delta)$, by focusing on the last element $\delta$ of the permutation $(\alpha, \beta, \gamma, \delta)$. In this case, a permutation after each exchange is $(\alpha, \beta, \delta, \gamma)$, $(\alpha, \delta, \beta, \gamma)$, and $(\delta, \alpha, \beta, \gamma)$. When $\delta$ reaches a head of the permutation, the processing unit 12 sets the state as a new permutation $(\alpha, \beta, \gamma, \delta)$, and sequentially selects the exchange targets in the same manner. Therefore, by repeating the change of the state represented by the state variable of 4 rows and 4 columns 12 times, the state returns to the original state.

The table 30 illustrates an example of a case where a determination criterion is satisfied during the traveling transition process. For example, it is assumed that the processing unit 12 determines that the accumulation $\Delta E'$ of energy change amount satisfies the determination criterion at a time point when the above-described transition pattern is repeated four times with the state 20 as a starting point. In this case, the processing unit 12 specifies a state 21 corresponding to the permutation (4, 1, 3, 2) as the second state for the state 20.

The table 40 illustrates an example of a case where the determination criterion is not satisfied during the traveling transition process. For example, the processing unit 12 reaches the state 20 at a time point when the above-described transition pattern is repeated 12 times with the state 20 as a starting point. For example, the processing unit 12 sets all the states generated by the transition pattern until the state 20 is reached, to different states. As described above, a procedure of starting from the first state and returning to the first state again, by repeating replacement with a certain transition pattern, is referred to as a traveling scenario.

In this manner, with the information processing apparatus 10, the traveling transition process of returning from the first state to the first state through the plurality of states is executed, by repeating the state transition of changing the values of the four state variables so as to satisfy the constraint in which a sum of the values of the state variables included in each row is 1 and a sum of the values of the state variables included in each column is 1 when the $N^2$ state variables are arranged in N rows and N columns. The second state in which the accumulation of the change amount of the value of the energy function for each state transition from the first state satisfies the predetermined determination criterion is specified, among the plurality of states sequentially obtained by the traveling transition process. Meanwhile, since the traveling transition process may be ended at a time point when the second state is specified, in this case, the information processing apparatus 10 does not obtain all the states in which the first state returns to the first state in the traveling transition process.

For example, the information processing apparatus 10 may search for the second state with respect to the first state, by performing an operation of the processing unit 12 of changing the values of four state variables at a time a plurality of times. Therefore, for example, the information processing apparatus 10 may efficiently search for more various states represented by the permutation (1, 4, 2, 3), (4, 1, 3, 2), or the like, with respect to the first state represented by the permutation (1, 2, 3, 4), and obtain the second state. The state represented by the permutation (1, 4, 2, 3) or (4, 1, 3, 2) is a state in which the values of a larger number than 4 of state variables are changed, with respect to the state represented by the permutation (1, 2, 3, 4). For example, it may be said that the information processing apparatus 10 implements the multi-bit transition of changing the values of the state variables of the number larger than 4, with respect to the first state, by the traveling transition process.

It is also considered that the information processing apparatus 10 repeats the state transition so as not to return to the first state, and implements the multi-bit transition with respect to the first state. Meanwhile, in this case, since there is no guarantee that the second state may be obtained, the information processing apparatus 10 holds, in the storage unit 11, copies of the value of each state variable in the first state and the local field $h_m$ of each state variable when the state transition from the first state is started. This is because, when the second state is not obtained, the first state may be restored. Meanwhile, when the copies of the value of each state variable in the first state and the local field $h_m$ are held in the storage unit 11, a large memory capacity is desirable for the storage unit 11. For example, in a case where the copy of the local field $h_m$ of each state variable in the first state is held, the memory capacity requested for the storage unit 11 may become excessive.

Accordingly, by matching the starting point and the end point with the first state by the traveling transition process, the information processing apparatus 10 does not have to hold, for example, the copy of the local field $h_m$ corresponding to the first state in the storage unit 11. By reaching the first state by the traveling transition process, the local field $h_m$ of each state variable also becomes a value corresponding to the first state. Therefore, for example, the information processing apparatus 10 may search for more various states while suppressing an increase in the memory capacity requested for the storage unit 11, for example, by efficiently using the memory capacity. Accordingly, the information processing apparatus 10 may efficiently search for various states.

The information processing apparatus 10 may execute the traveling transition process in combination with a normal search process. The normal search process is a process of searching for a solution by determining a state of a transition destination with respect to the current state depending on whether or not an energy change amount in a case where the values of the four state variables are changed with respect to the current state so as to satisfy a 2-Way 1-Hot constraint satisfies the above-described determination criterion.

For example, the processing unit 12 first executes the normal search process. In a case where a local solution is reached in the normal search process, the processing unit 12 may execute the traveling transition process with the local solution as the first state. The case where the local solution is reached is a case where all states of the next transition destination candidate at the current time point do not satisfy the determination criterion of Equation (5) or Equation (6), in the normal search process. In this case, when the processing unit 12 acquires the second state by the traveling transition process, the processing unit 12 may return to the normal search process from the second state. Therefore, the information processing apparatus 10 may escape from the local solution in the normal search process, search for a more appropriate solution, and improve solution-searching performance.

As still another example, the information processing apparatus 10 may search for a solution by a traveling transition process including a plurality of traveling scenarios. For example, in a case where the processing unit 12 returns to a first state in the traveling transition process by a first traveling scenario, the processing unit 12 may continue the traveling transition process by a second traveling scenario. In a case where a second state is specified in the traveling transition process by the first traveling scenario, the processing unit 12 may continue the traveling transition process by the second traveling scenario by setting the specified second state as a new first state.

For example, in a case where a local solution is reached in the normal search process, the processing unit 12 proceeds to the traveling transition process by the first traveling scenario, and acquires the second state by the first traveling scenario. The processing unit 12 may proceed to the traveling transition process by the second traveling scenario by setting the second state as a new first state, acquire the second state by the second traveling scenario, and return to the normal search process from the second state. The processing unit 12 may search for a solution only by the traveling transition process using a plurality of traveling scenarios without using the normal search process.

In this manner, by using a plurality of traveling scenarios in combination, the information processing apparatus 10 may search for various solutions that may not be reached by only one traveling scenario, and the solution-searching performance may be improved.

While periodically decreasing the temperature value T used in Equation (5) or Equation (6), the processing unit 12 executes the above-described search for the solution including the traveling transition process. After reaching the final temperature value, the processing unit 12 outputs, for example, a solution having the lowest energy among the solutions obtained so far, as a final solution for a permutation optimization problem. Accordingly, the information processing apparatus 10 may efficiently obtain a solution to the permutation optimization problem.

[Second Embodiment]

Next, a second embodiment will be described.

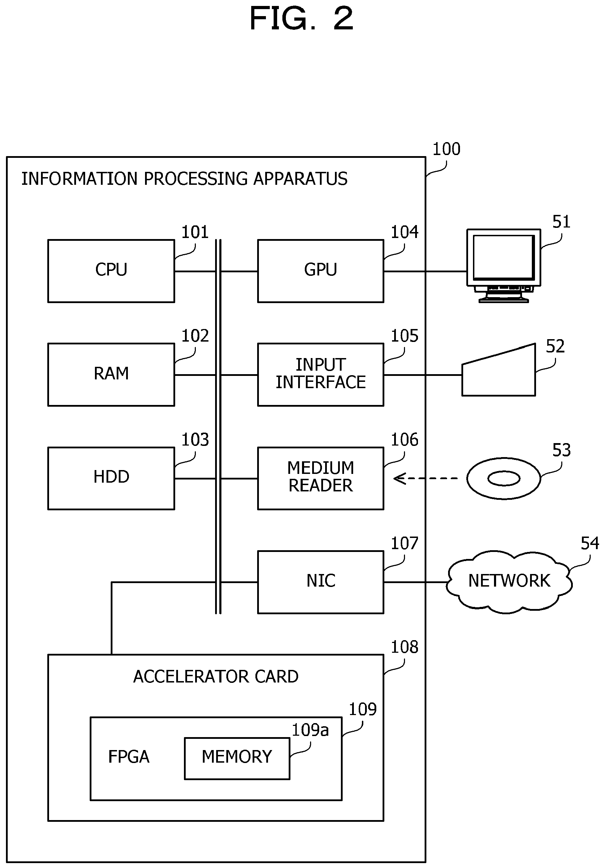

FIG. 2 is a diagram illustrating a hardware example of an information processing apparatus according to a second embodiment.

An information processing apparatus 100 searches for a solution to a combinatorial optimization problem by using an MCMC method, and outputs the searched solution. The information processing apparatus 100 includes a CPU 101, a RAM 102, a hard disk drive (HDD) 103, a GPU 104, an input interface 105, a medium reader 106, a network interface card (NIC) 107, and an accelerator card 108.

The CPU 101 is a processor that executes a command of a program. The CPU 101 loads at least a part of a program or data stored in the HDD 103 into the RAM 102, and executes the program. The CPU 101 may include a plurality of processor cores. The information processing apparatus 100 may have a plurality of processors. Processes described below may be executed in parallel by using a plurality of processors or processor cores. A set of the plurality of processors may be referred to as a "multiprocessor" or merely referred to as a "processor".

The RAM 102 is a volatile semiconductor memory that temporarily stores the program executed by the CPU 101 or data used for an operation by the CPU 101. The information processing apparatus 100 may include memories of types other than the RAM, and may include a plurality of memories.

The HDD 103 is a non-volatile storage device that stores data as well as programs of software such as an operating system (OS), middleware, or application software. The information processing apparatus 100 may include other types of storage devices such as a flash memory and a solid-state drive (SSD), and may include a plurality of non-volatile storage devices.

The GPU 104 outputs an image to a display 51 coupled to the information processing apparatus 100 in accordance with a command from the CPU 101. An arbitrary type of a display such as a cathode ray tube (CRT) display, a liquid crystal display (LCD), a plasma display, or an organic electro-luminescence (OEL) display may be used as the display 51.

The input interface 105 acquires an input signal from an input device 52 coupled to the information processing apparatus 100, and outputs the input signal to the CPU 101. As the input device 52, a pointing device such as a mouse, a touch panel, a touchpad, or a trackball, a keyboard, a remote controller, a button switch, or the like may be used. A plurality of types of input devices may be coupled to the information processing apparatus 100.

The medium reader 106 is a reading device that reads a program or data recorded in a recording medium 53. As the recording medium 53, for example, a magnetic disk, an optical disc, a magneto-optical (MO) disk, a semiconductor memory, or the like may be used. The magnetic disk includes a flexible disk (FD) or an HDD. The optical disc includes a compact disc (CD) or a Digital Versatile Disc (DVD).

For example, the medium reader 106 copies a program or data read from the recording medium 53 into another recording medium such as the RAM 102 or the HDD 103. The read program is executed by, for example, the CPU 101. The recording medium 53 may be a portable recording medium, and may be used to distribute the program and the data. The recording medium 53 and the HDD 103 will be referred to as computer readable recording medium in some cases.

The NIC 107 is an interface that is coupled to a network 54, and communicates with another computer via the network 54. The NIC 107 is coupled to, for example, a communication device such as a switch or a router through a cable. The NIC 107 may be a wireless communication interface.

The accelerator card 108 is a hardware accelerator that searches for a solution to a problem represented by an Ising-type energy function of Equation (1) by using the MCMC method. The accelerator card 108 accepts problem data indicating information on an energy function including a weight coefficient or a bias from the CPU 101, searches for a solution, and outputs the searched solution.

By performing the MCMC method at a certain temperature or the replica exchange method in which the states of the Ising model are exchanged among a plurality of temperatures, the accelerator card 108 may be used as a sampler that samples a state following a Boltzmann distribution at the corresponding temperature. In order to search a solution to the combinatorial optimization problem, the accelerator card 108 executes an annealing process such as the replica exchange method or the SA method in which a temperature value is gradually decreased.

The SA method is a method of efficiently finding an optimum solution by sampling a state according to the Boltzmann distribution at each temperature value and decreasing the temperature value used for sampling from a high temperature to a low temperature, for example, increasing an inverse temperature $\beta$. Since the state is changed to some extent even in a case where the low temperature side, for example, $\beta$ is large, there is a high possibility that an appropriate solution may be found even though the temperature value is decreased rapidly. For example, in a case where the SA method is used, the accelerator card 108 repeats an operation of decreasing the temperature value after repeating a trial of state transition a certain number of times at a certain temperature value.

The replica exchange method is a method in which the MCMC method is independently executed using a plurality of temperature values, and temperature values are exchanged as appropriate for states obtained at the respective temperature values. By searching in a narrow range of a state space by the MCMC method at a low temperature and searching in a wide range of the state space by the MCMC method at a high temperature, it is possible to efficiently find an appropriate solution. For example, in a case where the replica exchange method is used, the accelerator card 108 performs the trial of the state transition at each of the plurality of temperature values in parallel, an operation of exchanging temperature values at a predetermined exchange probability for a state obtained at each temperature value, every time a certain number of trials are performed, is repeated.

The accelerator card 108 has an FPGA 109. The FPGA 109 implements a solution search function in the accelerator card 108. The solution search function may be implemented by another type of electronic circuit such as a GPU or an ASIC. The FPGA 109 includes a memory 109a. The memory 109a holds problem data used for searches in the FPGA 109 or solutions searched in the FPGA 109. The memory 109a is, for example, a static random-access memory (SRAM). The FPGA 109 may include a plurality of memories including the memory 109a. The FPGA 109 is an example of the processing unit 12 according to the first embodiment. The memory 109a is an example of the storage unit 11 according to the first embodiment. The accelerator card 108 may have a RAM outside the FPGA 109, and may temporarily save data stored in the memory 109a into the RAM, in accordance with the process of the FPGA 109.

A hardware accelerator that searches for a solution to a problem having an Ising form, such as the accelerator card 108, may be referred to as an Ising machine, a Boltzmann machine, or the like.

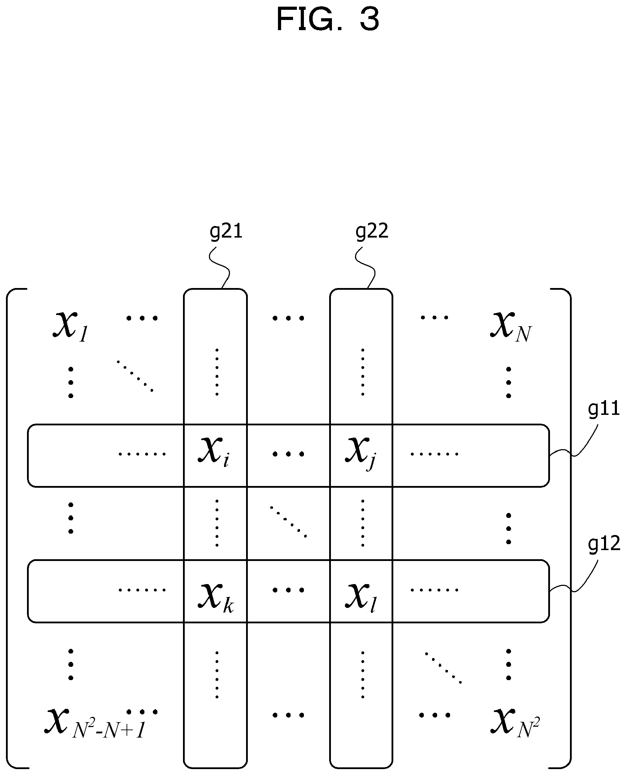

FIG. 3 is a diagram illustrating a bit flip control example with 2-Way 1-Hot.

A constraint condition called a 2-Way 1-Hot constraint may be imposed in a combinatorial optimization problem. The combinatorial optimization problem with 2-Way 1-Hot constraint is referred to as a permutation optimization problem. 2-Way 1-Hot is abbreviated as 2W1H.

A 1-Hot constraint is a constraint in which "there is only one variable having a value" 1 "in a certain set of state variables". For example, FIG. 3 illustrates $N^2$ (where N is an integer equal to or more than 3) state variables $x_1$, $x_2$, ... in N rows and N columns. Groups g11 and g12 indicate examples of groups of state variables corresponding to rows. Groups g21 and g22 indicate examples of groups of state variables corresponding to columns. In a case where the 1-Hot constraint is applied to groups of state variables corresponding to rows, a sum of the state variables of each row is equal to 1. For example, a sum of the state variables belonging to the group g11 is equal to 1. A sum of the state variables belonging to the group g12 is equal to 1. Alternatively, in a case where the 1-Hot constraint is applied to groups of state variables corresponding to columns, a sum of the state variables of each column is equal to 1. For example, a sum of the state variables belonging to the group g21 is equal to 1. A sum of the state variables belonging to the group g22 is equal to 1.

According to 2W1H, values of 4 state variables are changed by one operation so as to satisfy two 1-Hot constraints. For example, 4 bit flips as represented in Equation (7) are acquired. i, j, k, and l are a set of indices indicating a set of state variables to be flipped. i < j < k < l is obtained. FIG. 3 illustrates an example of a set of state variables corresponding to the indices i, j, k, and l. In 2W1H, the number of state variables is $N^2$, and each state variable is grouped as a group on which the 1-Hot constraint is imposed in each of N rows and each of N columns. The energy change $\Delta E$; in this case is represented by Equation (8). The change amount $\Delta h_m$ of a local field corresponding to the state variable $x_m$ is represented by Equation (9). m = 1, 2, ..., and $N^2$.

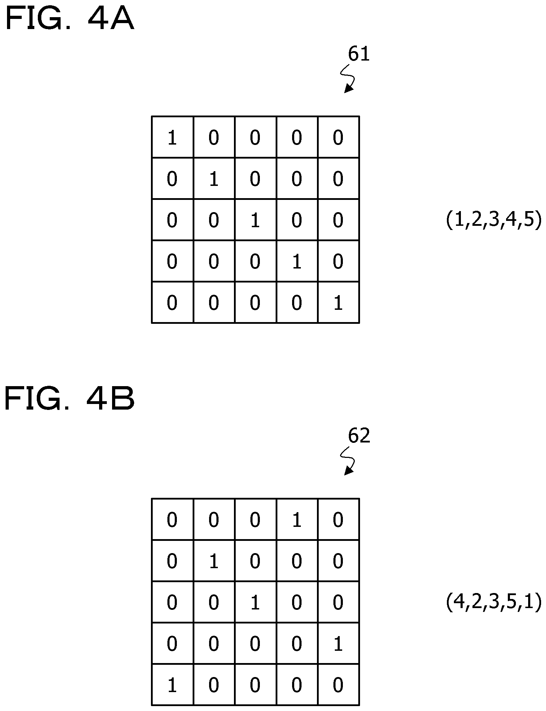

FIGs. 4A and 4B are diagrams illustrating an example of a correspondence relationship between a state and a permutation of an Ising model.

FIG. 4A illustrates an example of a state 61 of the Ising model in a case of N = 5. FIG. 4B illustrates a state 62 of the Ising model in a case of N = 5. Each of the states 61 and 62 is represented by 25 state variables $x_1$ to $x_{25}$. A first row of a matrix indicated by each of the states 61 and 62 is a group of the state variables $x_1$ to $x_5$. A second row is a group of the state variables $x_6$ to $x_{10}$. A third row is a group of the state variables $x_{11}$ to $x_{15}$. A fourth row is a group of the state variables $x_{16}$ to $x_{20}$. A fifth row is a group of the state variables $x_{21}$ to $x_{25}$. Each state variable is also grouped in a column direction.

In the example of the state 61, values of the state variables of each group in a row direction are as follows. $\{x_1, x_2, x_3, x_4, x_5\}$ = {1, 0, 0, 0, 0}. $\{x_6, x_7, x_8, x_9, x_{10}\}$ = {0, 1, 0, 0, 0}. $\{x_{11}, x_{12}, x_{13}, x_{14}, x_{15}\}$ = {0, 0, 1, 0, 0}. {X16, X17, X18, X19, X20} = {0, 0, 0, 1, 0}. {X21, X22, X23, $x_{24}$, $x_{25}$} = {0, 0, 0, 0, 1}. In this case, the state 61 is represented as a permutation (1, 2, 3, 4, 5). As described above, for example, a p-th value q from a left of the permutation indicates that an element of a p-th row from a top and a q-th column from a left of the matrix indicated by the state 61, the state 62, or the like is 1.

In the example of the state 62, values of the state variables of each group in a row direction are as follows. $\{x_1, x_2, x_3, x_4, x_5\}$ = {0, 0, 0, 1, 0}. $\{x_6, x_7, x_8, x_9, x_{10}\}$ = {0, 1, 0, 0, 0}. $\{x_{11}, x_{12}, x_{13}, x_{14}, x_{15}\}$ = {0, 0, 1, 0, 0}. $\{x_{16}, x_{17}, x_{18}, x_{19}, x_{20}\}$ = {0, 0, 0, 0, 1}. $\{x_{21}, x_{22}, x_{23}, x_{24}, x_{25}\}$ = {1, 0, 0, 0, 0}. In this case, the state 62 is represented by a permutation (4, 2, 3, 5, 1).

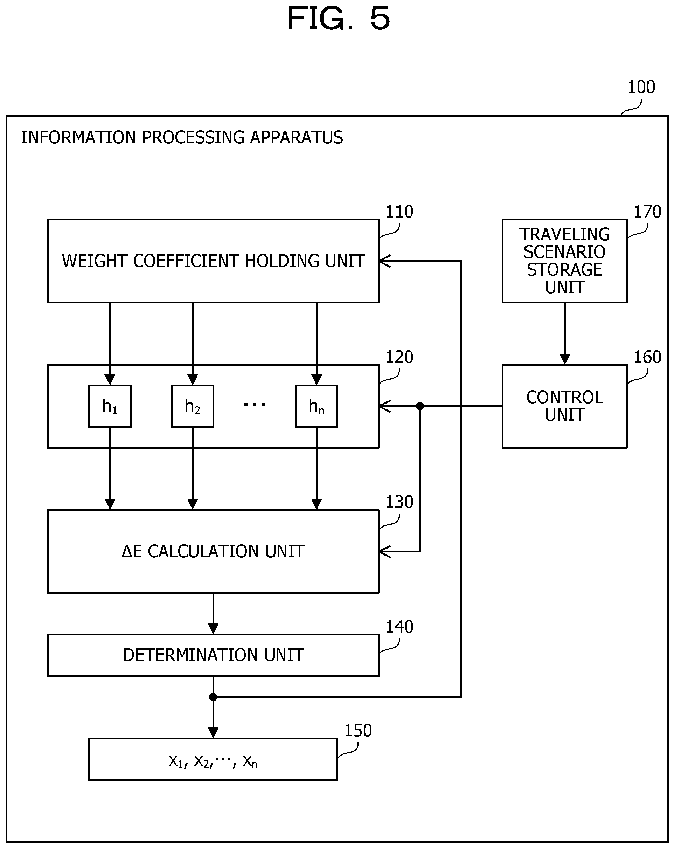

FIG. 5 is a diagram illustrating a functional example of an information processing apparatus.

The information processing apparatus 100 searches a solution to a permutation optimization problem. The information processing apparatus 100 includes a weight coefficient holding unit 110, a local-field holding unit 120, a ΔE calculation unit 130, a determination unit 140, a state holding unit 150, a control unit 160, and a traveling scenario storage unit 170. The FPGA 109 implements the weight coefficient holding unit 110, the local-field holding unit 120, the ΔE calculation unit 130, the determination unit 140, the state holding unit 150, the control unit 160, and the traveling scenario storage unit 170. The memory 109a is used as a data storage region in the weight coefficient holding unit 110, the local-field holding unit 120, and the traveling scenario storage unit 170.

The weight coefficient holding unit 110 holds a weight coefficient matrix W in Equation (1). Based on an index j supplied from the determination unit 140, the weight coefficient holding unit 110 supplies weight coefficients $W_{mi}$, $W_{mj}$, $W_{mk}$, and $W_{ml}$ to the local-field holding unit 120.

The local-field holding unit 120 holds local fields $h_1$, $h_2$, ..., and $h_n$, and updates the local fields $h_1$, $h_2$, ..., and $h_n$ by Equation (9), based on the weight coefficient matrix W held in the weight coefficient holding unit 110 in accordance with a change in values of the four state variables $x_i$, $x_j$, $x_k$, and $x_l$ by 2W1H. n is the number of all the state variables, and $n = N^2$.

The ΔE calculation unit 130 calculates the energy change ΔE; in a case where the values of the state variables $x_i$, $x_j$, $x_k$, and $x_l$ are changed by Equation (8). For a plurality of state variables set as change candidates, the ΔE calculation unit 130 may calculate a plurality of ΔE in parallel.

Based on Equation (6), the determination unit 140 determines whether or not the change in values of the four state variables $x_i$, $x_j$, $x_k$, and $x_l$ is allowed. In a case of being allowed, the determination unit 140 changes the values of the four state variables $x_i$, $x_j$, $x_k$, and $x_l$ held in the state holding unit 150, and supplies the indices i, j, k, and l to the weight coefficient holding unit 110. In a case where the plurality of ΔE are calculated in parallel by the ΔE calculation unit 130, the determination unit 140 selects any one of a plurality of sets of four state variables of which values are allowed to change, based on Equation (6), and changes values of four state variables belonging to the selected set.

The state holding unit 150 holds the state variables ($x_1$, $x_2$, ..., and $x_n$). By integrating ΔE in accordance with the state transition with respect to energy in an initial state, the state holding unit 150 may hold the energy corresponding to the current state.

According to a traveling scenario held in the traveling scenario storage unit 170, the control unit 160 controls an operation in a traveling transition mode in the local-field holding unit 120 and the ΔE calculation unit 130. The traveling transition mode is a mode in which the traveling transition process of the first embodiment is performed. In the traveling transition mode, the control unit 160 designates which four bits among the state variables ($x_1$, $x_2$, ..., and $x_n$), for example, the values of the four state variables are to be changed and reads the local fields, and calculation of ΔE to be executed. The control unit 160 controls the local-field holding unit 120 and the ΔE calculation unit 130 to switch between an operation in a normal 2W1H mode and an operation in the traveling transition mode.

The normal 2W1H mode is a mode in which, for example, one of the state variables ($x_1$, $x_2$, ..., and $x_n$) is sequentially selected as $x_j$, and a trial of whether or not to change the values of the four state variables $x_i$, $x_j$, $x_k$, and $x_l$ is performed. The normal 2W1H mode is a mode in which the normal search process in the first embodiment is performed. The trial of whether or not to change the values of the four state variables $x_i$, $x_j$, $x_k$, and $x_l$ may be performed in parallel for a plurality of $x_j$ in the normal 2W1H mode. The number of state variables to be changed in the normal 2W1H mode is four at most per one trial. For example, Japanese Laid-open Patent Publication No. 2021-157361 serves as a reference in the normal 2W1H mode.

The traveling scenario storage unit 170 stores information on a traveling scenario. The information on the traveling scenario stored in the traveling scenario storage unit 170 is rewritable from an outside.

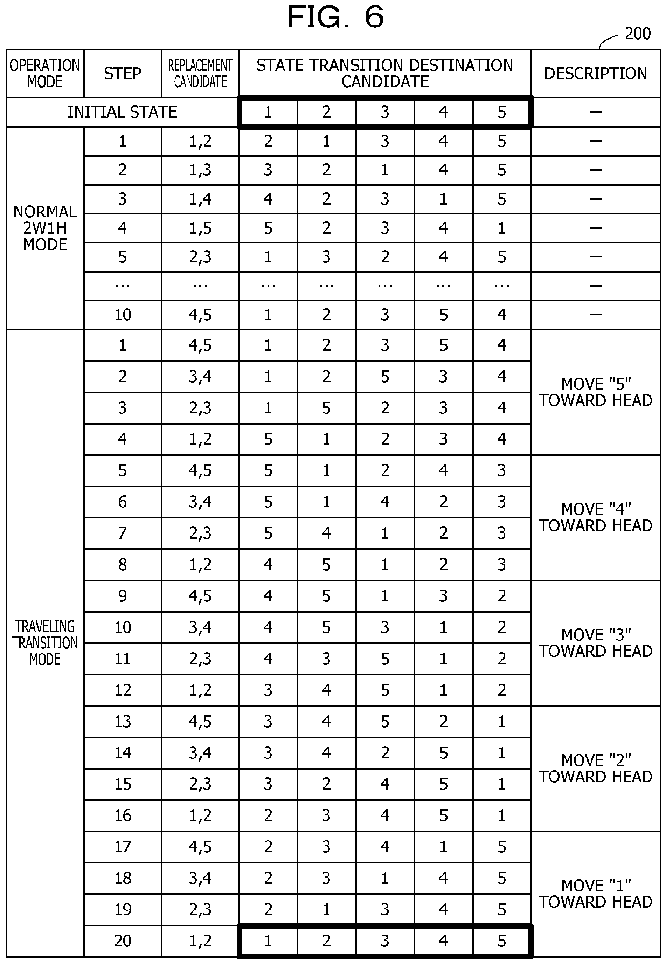

FIG. 6 is a diagram illustrating an operation example of the normal 2W1H mode and the traveling transition mode.

A table 200 illustrates an operation example of the normal 2W1H mode and the traveling transition mode by the information processing apparatus 100. As an example, N = 5 is set. An initial state is indicated by, for example, a permutation (1, 2, 3, 4, 5). "Replacement candidate" in the Table 200 indicates a position of each of two elements serving as replacement candidates in the permutation.

In this case, in the normal 2W1H mode, a state of the next state transition destination candidate of the permutation (1, 2, 3, 4, 5) is a state in which the two elements of the permutation are replaced. For the permutation (1, 2, 3, 4, 5), the number of the next state transition destination candidates is 10. For example, in a case where none of the 10 state transition destination candidates is allowed by Equation (6) in steps "1" to "10" in the normal 2W1H mode, the control unit 160 determines that a local solution is reached, and causes the local-field holding unit 120 and the ΔE calculation unit 130 to transition to the traveling transition mode. At this time, a state of a starting point of the traveling transition mode is a state of the permutation (1, 2, 3, 4, 5) corresponding to the local solution.

For example, the following traveling scenario is used in the traveling transition mode. For example, first, the control unit 160 replaces the last element "5" of the permutation (1, 2, 3, 4, 5) with another element so as to move the last element "5" one by one toward a head of the permutation. In this case, in four steps, the element "5" reaches the head and becomes a permutation (5, 1, 2, 3, 4). The control unit 160 replaces the last element "4" of the permutation (5, 1, 2, 3, 4) with another element so as to move the last element "4" one by one toward the head of the permutation (5, 1, 2, 3, 4). By repeating the above-described operation, the permutation returns to the permutation (1, 2, 3, 4, 5) of the starting point of the traveling transition mode in 20 steps in total. It may be said that the transitions sequentially performed by the traveling scenario in the traveling transition mode are temporary transitions.

During the above-described operation in the traveling transition mode, the $\Delta E$ calculation unit 130 calculates $\Delta E$ of Equation (8), and accumulates the calculated $\Delta E$, in each step. The local-field holding unit 120 updates the local fields $h_1$ to $h_n$ in accordance with the change in values of the four state variables in each step. The determination unit 140 updates the values of the corresponding four state variables in the state holding unit 150 in each step, and determines whether or not the accumulated $\Delta E$ satisfies the determination criterion of Equation (6).

For example, the $\Delta E$ calculation unit 130 calculates $\Delta E1$ for a next temporary transition destination #1 in a start state. Even when this transition is not accepted, the state and the local field are updated. By using the local field, the $\Delta E$ calculation unit 130 obtains $\Delta E12$ for a next temporary transition destination #2, and calculates the accumulation $\Delta E$ = $\Delta E2$ by setting $\Delta E1+\Delta E12$ = $\Delta E2$. $\Delta E2$ is an energy difference in a case of the state transition from the start state to the state of the temporary transition destination #2. In the same manner, $\Delta E$ = $\Delta E3$ of the accumulation for a temporary transition destination #3 is obtained by setting $\Delta E1+\Delta E12+\Delta E23$ = $\Delta E3$. For these $\Delta Ei$, the determination unit 140 determines whether or not the Metropolis determination criterion represented by Equation (6) is satisfied.

At a stage at which the determination criterion of Equation (6) is satisfied, the control unit 160 switches from the traveling transition mode to the normal 2W1H mode, with a state at that time point as the starting point. Alternatively, the control unit 160 continues the traveling transition mode in a different traveling scenario. In a case where the traveling transition mode is continued, the accumulation addition of the energy difference is reset, and the process is restarted from that point. Even in a case of being switched to the normal 2W1H mode or the traveling transition mode is continued, the local field is updated, so that the local field may not be newly updated.

On the other hand, in a case where the determination criterion of Equation (6) is not satisfied in all of the 20 steps in total in the traveling transition mode, the state variables $x_1$ to $x_n$ held in the state holding unit 150 return to the state of the permutation (1, 2, 3, 4, 5). The local fields $h_1$ to $h_n$ held in the local-field holding unit 120 also return to values corresponding to the state of the permutation (1, 2, 3, 4, 5). For example, in a case where the state returns to the original state indicated by the permutation (1, 2, 3, 4, 5) in the current traveling scenario, the control unit 160 may continue the traveling transition mode, by another traveling scenario.

Next, a process procedure for executing a search of a solution to a permutation optimization problem by using the SA method by the information processing apparatus 100 will be described.

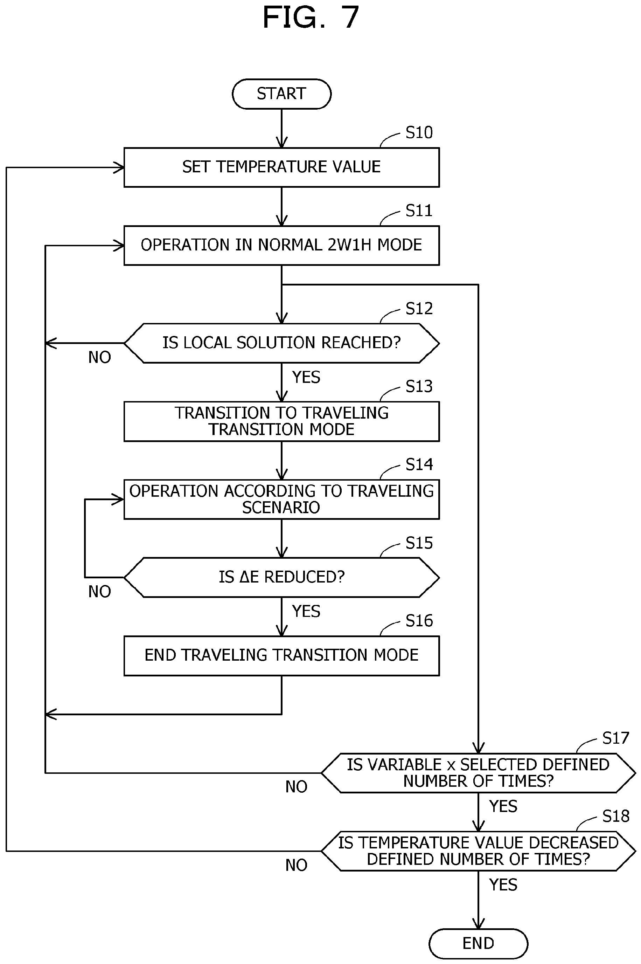

FIG. 7 is a flowchart illustrating a process example of an information processing apparatus.

(S10) The control unit 160 sets the temperature value T to be used in Equation (6) in the determination unit 140. In a case where step S10 is executed for a first time, the control unit 160 sets an initial temperature value to the temperature value T. In a case where step S10 is executed for a second time or later, the control unit 160 sets the temperature value T to a value lower than the previous value.

(S11) The control unit 160 causes the local-field holding unit 120 and the $\Delta E$ calculation unit 130 to operate in a normal 2W1H mode to perform a solution search. During the operation in the 2W1H mode, the control unit 160 executes steps S12 and S17.

(S12) The control unit 160 determines whether or not a local solution is reached, in the solution search in the normal 2W1H mode. In a case where the local solution is reached, the process proceeds to step S13. In a case where the local solution is not reached, the process proceeds to step S11. For example, in a case where all states of a next transition destination candidate are rejected by the determination unit 140, the control unit 160 determines that the local solution is reached. The case where all the states of the next transition destination candidate are rejected is a case where all energy change amounts corresponding to the next transition destination candidate are positive and the determination criterion of Equation (5) or Equation (6) is not satisfied.

(S13) The control unit 160 causes the local-field holding unit 120 and the $\Delta E$ calculation unit 130 to transition to a traveling transition mode.

(S14) The control unit 160 causes the local-field holding unit 120 and the $\Delta E$ calculation unit 130 to execute an operation according to a traveling scenario. As long as the transition is not accepted in the traveling transition mode, $\Delta E$ in the next temporary transition is calculated as a value obtained by adding $\Delta E$ in the previous temporary transition to the accumulation addition amount.

(S15) The control unit 160 determines whether or not the accumulation $\Delta E$ in the traveling transition mode is decreased. In a case where the accumulation $\Delta E$ is decreased, the process proceeds to step S16. In a case where the accumulation $\Delta E$ is not decreased, the process proceeds to step S14. The case where the accumulation $\Delta E$ is decreased may be a case where the accumulated $\Delta E$ becomes negative. In a case of $\Delta E < 0$, the determination criterion of Equation (6) is satisfied. Meanwhile, depending on the temperature value or a random number value, the state transition of accumulation $\Delta E > 0$ may be allowed by the determination criterion of Equation (6).

(S16) The control unit 160 ends the traveling transition mode, and causes the local-field holding unit 120 and the $\Delta E$ calculation unit 130 to transition to the normal 2W1H mode. The process proceeds to step S11.

(S17) The control unit 160 determines whether or not the variable $x_j$ of a change candidate is selected a defined number of times in the solution search in the normal 2W1H mode. In a case where the variable $x_j$ of the change candidate is selected the defined number of times, the process proceeds to step S18. In a case where the variable $x_j$ of the change candidate is not selected the defined number of times, the process proceeds to step S11. As described above, the four state variables $x_i$, $x_j$, $x_k$, and $x_l$ of the change candidates are specified, in accordance with the selection of the change candidate $x_j$.

(S18) The control unit 160 determines whether or not the temperature value T is decreased a defined number of times. In a case where the temperature value T is decreased the defined number of times, the control unit 160 outputs a solution having the lowest energy obtained so far and ends the process. In a case where the temperature value T is not decreased the defined number of times, the process proceeds to step S10.

Steps S17 and S18 may be considered to be the processes executed in step S11. During the execution of step S11, the determination of step S12 is executed.

In this manner, the information processing apparatus 100 may execute the normal 2W1H mode, and execute, in a case where a local solution is reached in the normal 2W1H mode, the traveling transition mode with the local solution as a state at a starting point. In this case, when a state having energy lower than the state of the starting point is specified by the traveling transition mode, the information processing apparatus 100 may return to the normal 2W1H mode from the specified state. Therefore, the information processing apparatus 100 may escape from the local solution in the normal 2W1H mode, search for a more appropriate solution, and improve solution-searching performance.

In a case where not the traveling transition mode but a transition pattern of not returning to the initial state is executed, it is desirable to store the local field of the initial state. In this case, a memory region of the local field is desirable to be twice.

By contrast, in the traveling transition mode, even when all the transition destination candidates are not accepted, the local field returns to the value at the start time point of the traveling transition mode. Therefore, the local field in the initial state may not be stored. Accordingly, the information processing apparatus 100 may efficiently use the memory region and improve the solution-searching performance.

Although an example in which the SA method is executed in the procedure illustrated in FIG. 7 is described, the information processing apparatus 100 may execute the replica exchange method. In this case, the setting of the temperature value in step S10 may be performed by exchanging temperature values between replicas. For example, the determination in step S18 may be made based on whether or not the exchange of the temperature values is performed a defined number of times.

The traveling scenario in the traveling transition mode may be other than the example illustrated in FIG. 6. Next, an example of another traveling scenario used in the traveling transition mode will be described.

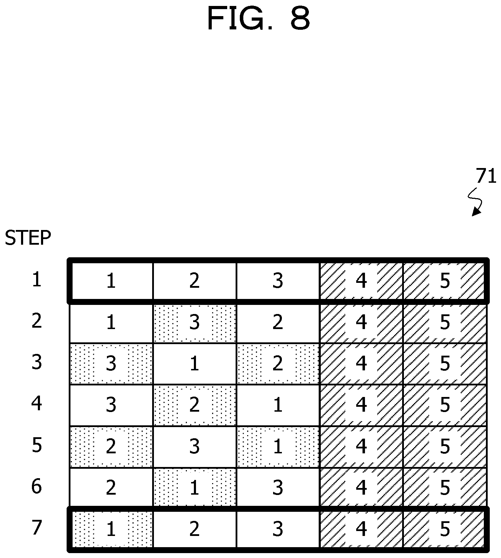

FIG. 8 is a diagram illustrating the another example (part 1) of the traveling transition mode.

A traveling scenario 71 illustrates an example in which elements (4, 5) in a permutation (1, 2, 3, 4, 5) are fixed. In the traveling scenario 71, an element "3" is sequentially replaced with another element so as to move forward one by one from the step "1" in an initial state, the element "2" is sequentially replaced with the another element in the same manner, and the element "1" is sequentially replaced with the another element in the same manner. By doing in this manner, the permutation reached in step "7" coincides with the original permutation (1, 2, 3, 4, 5).

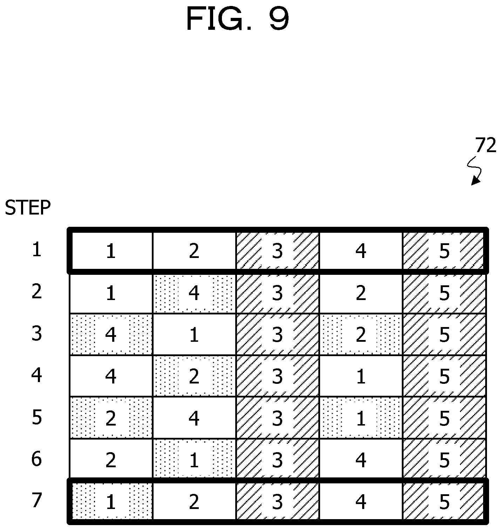

FIG. 9 is a diagram illustrating the another example (part 2) of the traveling transition mode.

A traveling scenario 72 illustrates an example in which elements (3, 5) in a permutation (1, 2, 3, 4, 5) are fixed. In the traveling scenario 72, the element "4" is sequentially replaced with another element so as to move forward one by one from the step "1" by skipping the element "3". Next, the element "2" is also sequentially replaced with the another element in a same manner by skipping the element "3", and then the element "1" is also sequentially replaced with the another element in a same manner by skipping the element "3". By doing in this manner, the permutation reached in step "7" coincides with the original permutation (1, 2, 3, 4, 5).

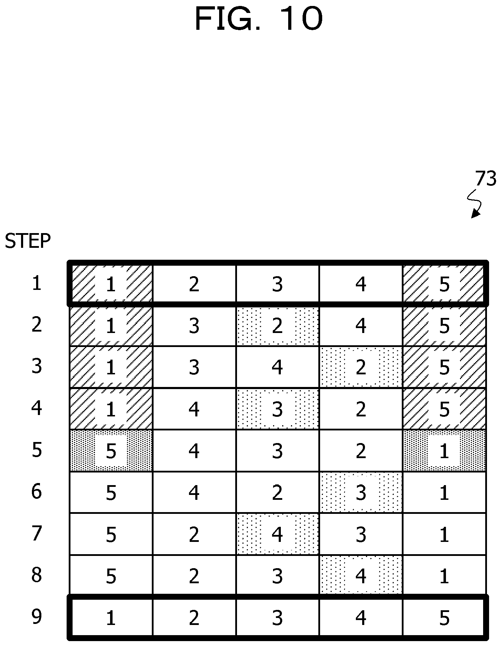

FIG. 10 is a diagram illustrating the another example (part 3) of the traveling transition mode.

A traveling scenario 73 illustrates an example in which, in a permutation (1, 2, 3, 4, 5), elements (1, 5) are fixed in steps "1" to "4", the elements (1, 5) are replaced in step "5", and the elements (1, 5) are fixed again in steps "6" to "9". In the traveling scenario 73, the element "2" is sequentially replaced with another element so as to move backward one by one from the step "1". At step "4", elements (3, 4) are replaced. The element "4" is sequentially replaced with the another element so as to be moved backward one by one from step "6". At step "9", the elements (1, 5) are replaced. By doing in this manner, the permutation reached in step "9" coincides with the original permutation (1, 2, 3, 4, 5).

In this manner, the information processing apparatus 100 may use various traveling scenarios. As described above, after performing the search in the traveling transition mode in a certain traveling scenario, the information processing apparatus 100 may continue the search in the traveling transition mode in another traveling scenario. For example, the control unit 160 may use the traveling scenario 72 after reaching step "7" by using the traveling scenario 71. Each value in the permutation exemplified in the traveling scenarios 71 to 73 may represent a position of each element counted from a left side in the permutation in step "1". In this case, for example, when a state in which accumulation of energy changes from step "1" satisfies the Metropolis criterion is specified by the traveling scenario 71, the control unit 160 may continue the traveling transition mode by using the traveling scenario 72 with the specified state as a starting point. By combining a plurality of traveling scenarios, the information processing apparatus 100 may efficiently search for more various states.

As described above, the information processing apparatus 100 executes, for example, the following process.

The information processing apparatus 100 stores $N^2$ state variables indicating a state of an Ising model included in an energy function. The information processing apparatus 100 executes the traveling transition process of returning from the first state to the first state through the plurality of states, by repeating the state transition of changing the values of the four state variables so as to satisfy the constraint in which a sum of the values of the state variables included in each row is 1 and a sum of the values of the state variables included in each column is 1 when the $N^2$ state variables are arranged in N rows and N columns. Among the states sequentially obtained by the traveling transition process, the information processing apparatus 100 specifies a second state in which an accumulation of change amount of a value of the energy function for each state transition from the first state satisfies a predetermined determination criterion.

Therefore, the information processing apparatus 100 may efficiently search for various states. For example, the above-described functions of the information processing apparatus 100 are implemented by the FPGA 109, a GPU, or the like. For example, the above-described functions of the information processing apparatus 100 may be implemented by the RAM 102 executing a program stored in the CPU 101. A coprocessor or a processor including an arithmetic circuit for the FPGA 109, the GPU, the CPU 101, or the like is an example of the processing unit 12 according to the first embodiment. For example, the determination criterion based on the Metropolis method or the determination criterion based on the Gibbs method using the temperature value and the random number value is an example of the predetermined determination criterion.

For example, in the traveling transition process, the information processing apparatus 100 calculates, for each state transition, a change amount of a value of the energy function in accordance with the state transition from the first state, and determines whether or not an accumulation of the change amount for each state transition satisfies the predetermined determination criterion. In a case where the accumulation of change amount does not satisfy the predetermined determination criterion, the information processing apparatus 100 selects a set of four state variables of which values are to be changed next, and in a case where the accumulation of change amount satisfies the predetermined determination criterion, the information processing apparatus 100 acquires a state after the current state transition as the second state.

Therefore, the information processing apparatus 100 may appropriately acquire the second state by using the determination criterion such as the Metropolis criterion.

The information processing apparatus 100 stores $N^2$ local fields corresponding to $N^2$ state variables, which are used to calculate the change amount of the value of the energy function in accordance with the state transition. The information processing apparatus 100 matches $N^2$ local fields corresponding to a first state at a starting point of the traveling transition process with $N^2$ local fields corresponding to the first state at an end point of the traveling transition process.

Therefore, in performing the traveling transition process, the information processing apparatus 100 may not hold a copy of each local field corresponding to the first state serving as the starting point, and may efficiently use the memory capacity to improve efficiency of the solution search.

The information processing apparatus 100 sets the plurality of states to be passed through in the traveling transition process to states different from each other. Therefore, the information processing apparatus 100 may efficiently search for various states.

The information processing apparatus 100 may perform a normal search process in which an update of the values of the four state variables is repeated in accordance with determination of whether or not the change amount of the value of the energy function in a case where the values of the four state variables are changed so as to satisfy the constraint satisfies a predetermined determination criterion. In a case where a local solution is reached in the normal search process, the information processing apparatus 100 may execute the traveling transition process with the local solution as the first state.

Accordingly, in a case where the solution search in the normal search process is delayed, by switching to the traveling transition process, the information processing apparatus 100 may escape from the local solution reached in the normal search process, continue the solution search, and improve the solution-searching performance.

At this time, when specifying a second state by the traveling transition process, the information processing apparatus 100 may restart the normal search process from the second state. Therefore, the information processing apparatus 100 may continue the normal search process after escaping from the local solution reached in the normal search process by using the traveling transition process, and may improve the solution-searching performance.

The information processing apparatus 100 may execute the traveling transition process by using a first traveling scenario indicating a first selection order of a set of four state variables of which values are to be changed. When the first state is returned without the second state being specified by the traveling transition process using the first traveling scenario, the information processing apparatus 100 may execute the traveling transition process by switching to a second traveling scenario indicating a second selection order different from the first selection order. Therefore, the information processing apparatus 100 may efficiently search for more various states.

When specifying the second state by the traveling transition process using the first traveling scenario, the information processing apparatus 100 may switch to the second traveling scenario indicating the second selection order different from the first selection order, and execute the traveling transition process by setting the specified second state as a new first state. Therefore, the information processing apparatus 100 may efficiently search for more various states.

The above-described functions of the information processing apparatus 100 may be applied to a permutation optimization problem such as QAP, TSP, VRP and LOP.

The information process according to the first embodiment may be implemented by causing the processing unit 12 to execute a program. The information process according to the second embodiment may be implemented by causing the CPU 101 to execute the program. The program may be recorded in the computer-readable recording medium 53.

For example, the program may be distributed by distributing the recording medium 53 in which the program is recorded. The program may be stored in another computer and the program may be distributed via a network. For example, a computer may store (install) the program recorded in the recording medium 53 or the program received from the another computer in a storage device such as the RAM 102 or the HDD 103, read the program from the storage device, and execute the program.

**Claims**

1. An information processing apparatus that searches for a solution to a permutation optimization problem represented by an energy function of an Ising model, the information processing apparatus comprising:

   a storage unit that stores $N^2$ state variables (N is an integer equal to or more than 3) which indicate a state of the Ising model, the $N^2$ state variables being included in the energy function; and
   a processing unit that

   executes a traveling transition process of returning from a first state to the first state through a plurality of states by repeating a state transition of changing values of four state variables of the $N^2$ state variables so as to satisfy a constraint in which a sum of values of state variables included in each row is 1 and a sum of values of state variables included in each column is 1 when the $N^2$ state variables are arranged in N rows and N columns,
   specifies a second state in which an accumulation of a change amount of a value of the energy function for each state transition from the first state satisfies a predetermined determination criterion, among the plurality of states sequentially obtained by the traveling transition process, and
   searches for a solution to a permutation optimization problem represented by the energy function by starting from the second state.

2. The information processing apparatus according to claim 1, wherein each time the state transition is performed in the traveling transition process, the processing unit is further configured to:

   acquire the change amount of the value of the energy function in accordance with the state transition,
   determine whether the accumulation of the change amount for each state transition from the first state satisfies the certain determination criterion,
   select, when the accumulation of the change amount does not satisfy the certain determination criterion, a set of the four state variables of which values are to be changed next, and
   specify, when the accumulation of the change amount satisfies the certain determination criterion, a state after the current state transition as the second state.

3. The information processing apparatus according to claim 2, wherein the storage unit is further configured to

   store $N^2$ local fields which correspond to the $N^2$ state variables, which are used to acquire the change amount of the value of the energy function in accordance with the state transition, and
   the processing unit is further configured to
   match the $N^2$ local fields which correspond to the first state at a starting point of the traveling transition process and the $N^2$ local fields which correspond to the first state at an end point of the traveling transition process.

4. The information processing apparatus according to claim 1, wherein the processing unit is further configured to set the plurality of states to states different from each other.

5. The information processing apparatus according to claim 1, wherein the processing unit is further configured to:

   perform a search process of repeatedly updating the values of the four state variables in accordance with determination of whether the change amount of the value of the energy function when the values of the four state variables are changed so as to satisfy the constraint satisfies a certain determination criterion, and execute the traveling transition process with a local solution as the first state when the local solution is reached in the search process.

6. The information processing apparatus according to claim 1 or 5, wherein the processing unit is further configured to:

   execute the traveling transition process by using a first traveling scenario which indicates a first selection order of a set of the four state variables of which the values are to be changed, switch to, when the first state is returned without specifying the second state by the traveling transition process which uses the first traveling scenario, a second traveling scenario which indicates a second selection order different from the first selection order, and execute the traveling transition process with the second traveling scenario.

7. The information processing apparatus according to claim 1 or 5, wherein processing unit is further configured to:

   execute the traveling transition process by using a first traveling scenario which indicates a first selection order of a set of the four state variables of which the values are to be changed, and switch to, when the second state is specified by the traveling transition process which uses the first traveling scenario, a second traveling scenario which indicates a second selection order different from the first selection order, and execute the traveling transition process with the specified second state as a new first state.

8. An information processing method for a computer to execute a process comprising:

   storing $N^2$ state variables (N is an integer equal to or more than 3) which indicate a state of the Ising model, the $N^2$ state variables being included in the energy function; executing a traveling transition process of returning from a first state to the first state through a plurality of states by repeating a state transition of changing values of four state variables of the $N^2$ state variables so as to satisfy a constraint in which a sum of values of state variables included in each row is 1 and a sum of values of state variables included in each column is 1 when the $N^2$ state variables are arranged in N rows and N columns; specifying a second state in which an accumulation of a change amount of a value of the energy function for each state transition from the first state satisfies a predetermined determination criterion, among the plurality of states sequentially obtained by the traveling transition process; and searching for a solution to a permutation optimization problem represented by the energy function by starting from the second state.

9. The information processing method according to claim 8, wherein each time the state transition is performed in the traveling transition process, the process further comprising:

   acquiring the change amount of the value of the energy function in accordance with the state transition; determining whether the accumulation of the change amount for each state transition from the first state satisfies the certain determination criterion; selecting, when the accumulation of the change amount does not satisfy the certain determination criterion, a set of the four state variables of which values are to be changed next; and specifying, when the accumulation of the change amount satisfies the certain determination criterion, a state after the current state transition as the second state.

10. The information processing method according to claim 9, wherein the process further comprising

   storing $N^2$ local fields which correspond to the $N^2$ state variables, which are used to acquire the change amount of the value of the energy function in accordance with the state transition, and

matching the $N^2$ local fields which correspond to the first state at a starting point of the traveling transition process and the $N^2$ local fields which correspond to the first state at an end point of the traveling transition process.

11. The information processing method according to claim 8, wherein the process further comprising
setting the plurality of states to states different from each other.

12. An information processing program that causes at least one computer to execute a process, the process comprising:

storing $N^2$ state variables (N is an integer equal to or more than 3) which indicate a state of the Ising model, the $N^2$ state variables being included in the energy function;
executing a traveling transition process of returning from a first state to the first state through a plurality of states by repeating a state transition of changing values of four state variables of the $N^2$ state variables so as to satisfy a constraint in which a sum of values of state variables included in each row is 1 and a sum of values of state variables included in each column is 1 when the $N^2$ state variables are arranged in N rows and N columns;
specifying a second state in which an accumulation of a change amount of a value of the energy function for each state transition from the first state satisfies a predetermined determination criterion, among the plurality of states sequentially obtained by the traveling transition process; and
searching for a solution to a permutation optimization problem represented by the energy function by starting from the second state.

13. The information processing program according to claim 12, wherein each time the state transition is performed in the traveling transition process, the process further comprising:

acquiring the change amount of the value of the energy function in accordance with the state transition;
determining whether the accumulation of the change amount for each state transition from the first state satisfies the certain determination criterion;
selecting, when the accumulation of the change amount does not satisfy the certain determination criterion, a set of the four state variables of which values are to be changed next; and
specifying, when the accumulation of the change amount satisfies the certain determination criterion, a state after the current state transition as the second state.

14. The information processing program according to claim 13, wherein the process further comprising

storing $N^2$ local fields which correspond to the $N^2$ state variables, which are used to acquire the change amount of the value of the energy function in accordance with the state transition, and
matching the $N^2$ local fields which correspond to the first state at a starting point of the traveling transition process and the $N^2$ local fields which correspond to the first state at an end point of the traveling transition process.

15. The information processing program according to claim 12, wherein the process further comprising
setting the plurality of states to states different from each other.

# FIG. 1

20

| 1 | 0 | 0 | 0 |
|---|---|---|---|
| 0 | 1 | 0 | 0 |
| 0 | 0 | 1 | 0 |
| 0 | 0 | 0 | 1 |

↓

(1, 2, 3, 4)

**INFORMATION PROCESSING APPARATUS** 10

STORAGE UNIT 11

PROCESSING UNIT 12

**EXAMPLE OF TRAVELING TRANSITION PROCESS IN CASE WHERE SECOND STATE IS OBTAINED**

30

| NUMBER OF TIMES | STATE | | | |
|---|---|---|---|---|
| 0 | 1 | 2 | 3 | 4 |
| 1 | 1 | 2 | 4 | 3 |
| 2 | 1 | 4 | 2 | 3 |
| 3 | 4 | 1 | 2 | 3 |
| 4 | 4 | 1 | 3 | 2 |

SATISFY DETERMINATION CRITERION

↓

21

| 0 | 0 | 0 | 1 |
|---|---|---|---|
| 1 | 0 | 0 | 0 |
| 0 | 0 | 1 | 0 |
| 0 | 1 | 0 | 0 |

**EXAMPLE OF TRAVELING TRANSITION PROCESS IN CASE WHERE SECOND STATE IS NOT OBTAINED**

40

| NUMBER OF TIMES | STATE | | | |
|---|---|---|---|---|
| 0 | 1 | 2 | 3 | 4 |
| 1 | 1 | 2 | 4 | 3 |
| 2 | 1 | 4 | 2 | 3 |
| 3 | 4 | 1 | 2 | 3 |
| 4 | 4 | 1 | 3 | 2 |
| 5 | 4 | 3 | 1 | 2 |
| 6 | 3 | 4 | 1 | 2 |
| 7 | 3 | 4 | 2 | 1 |
| 8 | 3 | 2 | 4 | 1 |
| 9 | 2 | 3 | 4 | 1 |
| 10 | 2 | 3 | 1 | 4 |
| 11 | 2 | 1 | 3 | 4 |
| 12 | 1 | 2 | 3 | 4 |

# FIG. 2

INFORMATION PROCESSING APPARATUS 100

CPU 101

GPU 104

RAM 102

INPUT INTERFACE 105

HDD 103

MEDIUM READER 106

NIC 107

NETWORK 54

ACCELERATOR CARD 108

FPGA

MEMORY 109a

109

51

52

53

# FIG. 3

## FIG. 4A

61

| 1 | 0 | 0 | 0 | 0 |
| 0 | 1 | 0 | 0 | 0 |
| 0 | 0 | 1 | 0 | 0 |
| 0 | 0 | 0 | 1 | 0 |
| 0 | 0 | 0 | 0 | 1 |

(1,2,3,4,5)

## FIG. 4B

62

| 0 | 0 | 0 | 1 | 0 |
| 0 | 1 | 0 | 0 | 0 |
| 0 | 0 | 1 | 0 | 0 |
| 0 | 0 | 0 | 0 | 1 |
| 1 | 0 | 0 | 0 | 0 |

(4,2,3,5,1)

# FIG. 5

100

INFORMATION PROCESSING APPARATUS

110

WEIGHT COEFFICIENT HOLDING UNIT

170

TRAVELING SCENARIO STORAGE UNIT

120

$h_1$    $h_2$    $\cdots$    $h_n$

160

CONTROL UNIT

130

ΔE CALCULATION UNIT

140

DETERMINATION UNIT

150

$x_1, x_2, \cdots, x_n$

EP 4 290 417 A1

# FIG. 6

| OPERATION MODE | STEP | REPLACEMENT CANDIDATE | STATE TRANSITION DESTINATION CANDIDATE | | | | | DESCRIPTION |
|---|---|---|---|---|---|---|---|---|
| INITIAL STATE | | | 1 | 2 | 3 | 4 | 5 | — |
| NORMAL 2W1H MODE | 1 | 1,2 | 2 | 1 | 3 | 4 | 5 | — |
| | 2 | 1,3 | 3 | 2 | 1 | 4 | 5 | — |
| | 3 | 1,4 | 4 | 2 | 3 | 1 | 5 | — |
| | 4 | 1,5 | 5 | 2 | 3 | 4 | 1 | — |
| | 5 | 2,3 | 1 | 3 | 2 | 4 | 5 | — |
| | ... | ... | ... | ... | ... | ... | ... | — |
| | 10 | 4,5 | 1 | 2 | 3 | 5 | 4 | — |
| TRAVELING TRANSITION MODE | 1 | 4,5 | 1 | 2 | 3 | 5 | 4 | MOVE "5" TOWARD HEAD |
| | 2 | 3,4 | 1 | 2 | 5 | 3 | 4 | |
| | 3 | 2,3 | 1 | 5 | 2 | 3 | 4 | |
| | 4 | 1,2 | 5 | 1 | 2 | 3 | 4 | |
| | 5 | 4,5 | 5 | 1 | 2 | 4 | 3 | MOVE "4" TOWARD HEAD |
| | 6 | 3,4 | 5 | 1 | 4 | 2 | 3 | |
| | 7 | 2,3 | 5 | 4 | 1 | 2 | 3 | |
| | 8 | 1,2 | 4 | 5 | 1 | 2 | 3 | |
| | 9 | 4,5 | 4 | 5 | 1 | 3 | 2 | MOVE "3" TOWARD HEAD |
| | 10 | 3,4 | 4 | 5 | 3 | 1 | 2 | |
| | 11 | 2,3 | 4 | 3 | 5 | 1 | 2 | |
| | 12 | 1,2 | 3 | 4 | 5 | 1 | 2 | |
| | 13 | 4,5 | 3 | 4 | 5 | 2 | 1 | MOVE "2" TOWARD HEAD |
| | 14 | 3,4 | 3 | 4 | 2 | 5 | 1 | |
| | 15 | 2,3 | 3 | 2 | 4 | 5 | 1 | |
| | 16 | 1,2 | 2 | 3 | 4 | 5 | 1 | |
| | 17 | 4,5 | 2 | 3 | 4 | 1 | 5 | MOVE "1" TOWARD HEAD |
| | 18 | 3,4 | 2 | 3 | 1 | 4 | 5 | |
| | 19 | 2,3 | 2 | 1 | 3 | 4 | 5 | |
| | 20 | 1,2 | 1 | 2 | 3 | 4 | 5 | |

200

23

# FIG. 7

# FIG. 8

71

STEP

| | | | | |
|---|---|---|---|---|
| 1 | 2 | 3 | 4 | 5 |
| 1 | 3 | 2 | 4 | 5 |
| 3 | 1 | 2 | 4 | 5 |
| 3 | 2 | 1 | 4 | 5 |
| 2 | 3 | 1 | 4 | 5 |
| 2 | 1 | 3 | 4 | 5 |
| 1 | 2 | 3 | 4 | 5 |

# FIG. 9

72

STEP

| | | | | | |
|---|---|---|---|---|---|
| 1 | 1 | 2 | 3 | 4 | 5 |
| 2 | 1 | 4 | 3 | 2 | 5 |
| 3 | 4 | 1 | 3 | 2 | 5 |
| 4 | 4 | 2 | 3 | 1 | 5 |
| 5 | 2 | 4 | 3 | 1 | 5 |
| 6 | 2 | 1 | 3 | 4 | 5 |
| 7 | 1 | 2 | 3 | 4 | 5 |

# FIG. 10

73

STEP

| 1 | 1 | 2 | 3 | 4 | 5 |
|---|---|---|---|---|---|
| 2 | 1 | 3 | 2 | 4 | 5 |
| 3 | 1 | 3 | 4 | 2 | 5 |
| 4 | 1 | 4 | 3 | 2 | 5 |
| 5 | 5 | 4 | 3 | 2 | 1 |
| 6 | 5 | 4 | 2 | 3 | 1 |
| 7 | 5 | 2 | 4 | 3 | 1 |
| 8 | 5 | 2 | 3 | 4 | 1 |
| 9 | 1 | 2 | 3 | 4 | 5 |

Europäisches Patentamt

European Patent Office

Office européen des brevets

# EUROPEAN SEARCH REPORT

Application Number

EP 23 16 6964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 157361 A (FUJITSU LTD) 7 October 2021 (2021-10-07) * paragraphs [0005] – [0052]; figure 1 * | 1-15 | INV. G06N5/01 G06N7/01 |
| A | COOK CHASE ET AL: "GPU-based Ising computing for solving max-cut combinatorial optimization problems", INTEGRATION, THE VLSI JOURNAL, NORTH-HOLLAND PUBLISHING COMPANY. AMSTERDAM, NL, vol. 69, 16 August 2019 (2019-08-16), pages 335-344, XP085900921, ISSN: 0167-9260, DOI: 10.1016/J.VLSI.2019.07.003 [retrieved on 2019-08-16] * Section 3.2; page 337 – page 338; figure 3 * | 1-15 | |
| A | S V Isakov ET AL: "Optimised simulated annealing for Ising spin glasses", arXiv:1401.1084v3 [cond-mat.dis-m] 17 June 2014, 17 June 2014 (2014-06-17), pages 1-10, XP055237920, Retrieved from the Internet: URL:http://arxiv.org/pdf/1401.1084v3.pdf [retrieved on 2015-12-21] * Sections 1 and 2.4; page 1 – page 2 * | 1-15 | TECHNICAL FIELDS SEARCHED (IPC) G06N |

The present search report has been drawn up for all claims

| Place of search | Date of completion of the search | Examiner |
|---|---|---|
| The Hague | 30 October 2023 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6964

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2023

| Patent document cited in search report | | Publication date | Patent family member(s) | | Publication date |
|---|---|---|---|---|---|
| JP 2021157361 | A | 07-10-2021 | CN | 113449901 A | 28-09-2021 |
| | | | EP | 3889843 A1 | 06-10-2021 |
| | | | JP | 2021157361 A | 07-10-2021 |
| | | | US | 2021303755 A1 | 30-09-2021 |

EPO FORM P0459

For more details about this annex : see Official Journal of the European Patent Office, No. 12/82

**EP 4 290 417 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021157361 A
- JP 2021043787 A
- JP 2021033657 A
- US 20210072959 A